Europäisches Patentamt

European Patent Office

Office européen des brevets

(19)

(11) EP 1 353 434 A2

(12) EUROPEAN PATENT APPLICATION

(43) Date of publication:
15.10.2003 Bulletin 2003/42

(51) Int Cl.⁷: H02K 9/20

(21) Application number: 03075845.2

(22) Date of filing: 25.03.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 11.04.2002 US 120652

(71) Applicant: Siemens Westinghouse Power
Corporation
Orlando, FL 32826-2399 (US)

(72) Inventors:
• Christodoulou, Alex
Oviedo, FL 32765 (US)

• Gregory, Mark D.
Orlando, FL 32817 (US)
• McCreight, Kirr M.
Oviedo, FL 32765 (US)
• McDonald, Eric
Oviedo, FL 32765 (US)
• Nelson, Robert J.
Orlando, FL 32803 (US)

(74) Representative: McGowan, Nigel George et al
Siemens Shared Services,
c/o Siemens AG,
Postfach 22 16 34
80506 München (DE)

(54) **Method for increasing the capacity of an air-cooled power generator**

(57)    A method of increasing capacity of an air-cooled power generator 30 includes retrofitting a water evaporative cooler 48 to the generator. The water evaporative cooler 48 includes a water absorbent media 50, a controllable water inlet 52,53 for controllably delivering water from a water supply to the water absorbent media, at least one sensor 54, and a controller 56 responsive to the at least one sensor. The retrofitting includes mounting the water evaporative cooler 48 so that the water absorbent media 50 is in fluid communication a flow of cooling air, connecting the controllable water inlet 52,53 to the water supply, mounting the at least one sensor 54 for sensing at least one parameter relating to the flow of cooling air, and connecting the controller 56 to the at least one sensor to thereby operate the controllable water inlet based upon the at least one sensor.

FIG. 3.

EP 1 353 434 A2

## Description

### Field of the Invention

The present invention relates to the field of power generation and, more particularly, to air-cooled power generators.

### Background of the Invention

An electric power generator conventionally includes a housing, a shaft within the housing, a rotor driven by the shaft, and a stator within the housing and surrounding the rotor. The generator produces electrical current as the rotor turns within the stator, the electrical current flowing through respective windings mounted on the rotor and stator. The electrical current flowing through the windings generates heat. Typically, the rotor and stator have an upper temperature limit. In other words, the temperature limits of the rotor and stator set a capacity limit for the generator.

Accordingly, the capacity of a generator is related to how effectively the generator can be cooled and maintained within a desired temperature range. Of course, ambient conditions, such as air temperature, humidity, etc. may affect efforts to cool the generator and, thus, the generator's capacity. Generator cooling, therefore, is an important consideration, especially for generators being operated in geographical regions subject to extremely high ambient temperatures (i.e., in excess of 40°C).

An air-cooled power generation system uses ambient air to cool the electrical generator. Such air-cooled systems are typically either an open air-cooled (OAC) system or a totally enclosed water-to-air cooled (TEWAC) system. In an OAC system, ambient air is drawn into the housing and an air flow is generated within the housing to cool the generator. In a TEWAC system, the air flow is recycled through a cooling circuit and the cooled air is circulated within the housing to cool the generator.

Evaporative cooling is another technique that has been used for cooling and has been designed for and installed with new power generators, most commonly in the Southwestern United States. With evaporative cooling, the ambient air drawn in from outside the housing transfers heat (i.e., heat of vaporization) to water circulating through a media and, as a result, the temperature of the air is lowered in a process referred to as adiabatic saturation. Because of the still widely held view that evaporative cooling is of little benefit in geographic regions subject to damp weather conditions, its use to date has been mainly restricted to providing supplemental cooling for generators located in arid regions, such as the Southwestern United States.

Although evaporative cooling has been incorporated as a design feature of new power generators, there is a large, installed base of existing generators that lack such a feature. This large, installed base of power generators are not designed for evaporative cooling and many may be in relatively humid locations where evaporative cooling has been thought to be of little benefit.

### Summary of the Invention

In view of the foregoing background, it is therefore an object of the invention to provide a method for increasing the capacity of an air-cooled power generator.

This and other objects, features, and advantages in accordance with the present invention are provided by a method of increasing the cooling capability of an air-cooled power generator by retrofitting an evaporative cooler to the generator. Prior to retrofitting, the air-cooled generator typically will include a housing having an air inlet and air outlet, a shaft, a rotor driven by the shaft, a stator within the housing and surrounding the rotor, and a shaft-mounted blower. The blower may generate a flow of cooling air from the inlet and through the outlet to thereby cool the rotor and/or stator. Retrofitting preferably includes mounting the evaporative cooler so that it is in fluid communication with the flow of cooling air.

The water evaporative cooler may comprise a water absorbent media and a water inlet for delivering water from a water supply to the water absorbent media. Thus, the retrofitting may further include connecting the water inlet to the water supply. The evaporative cooler water inlet, moreover, may be a controllable inlet for controllably delivering water from the water supply to the water absorbent media.

The water evaporative cooler, moreover, may include at least one sensor for sensing at least one parameter, the at least one parameter preferably relating to the flow of cooling air. The evaporative cooler may also include a controller responsive to the at least one sensor to operate the controllable water inlet based upon the at least one sensor.

The retrofitting, therefore, may further include mounting the at least one sensor to sense the at least one parameter, and connecting the controller to the at least one sensor. Operating the retrofitted air-cooled generator, therefore, may include generating a flow of cooling air while sensing the at least one parameter and controlling the delivery of water from the water supply to the water absorbent media in response to the sensor. The method thus results in further cooling the air flow, thereby increasing the capacity of the generator accordingly.

**Brief Description of the Drawings**

FIG. 1 is a flow chart for the method of increasing generator capacity in accordance with the invention.
FIG. 2 is a fragmentary perspective view of an air-cooled power generator retrofitted according to the flow chart of FIG. 1.
FIG. 3 is a perspective view of a water evaporative cooler of the air-cooled power generator shown in FIG. 2.
FIG. 4 is a greatly enlarged partial perspective view taken along line 4-4 of FIG. 3.
FIG. 5 is a plot of power output versus ambient dry bulb temperature representative of the benefit from evaporative cooling according to the present invention.

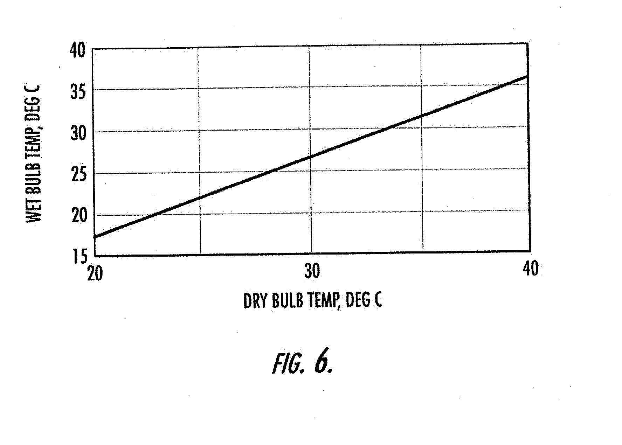

FIG. 6 is a plot of dry bulb temperature versus wet bulb temperature for a relative humidity value representative of the values used according to the present invention.

**Detailed Description of the Preferred Embodiments**

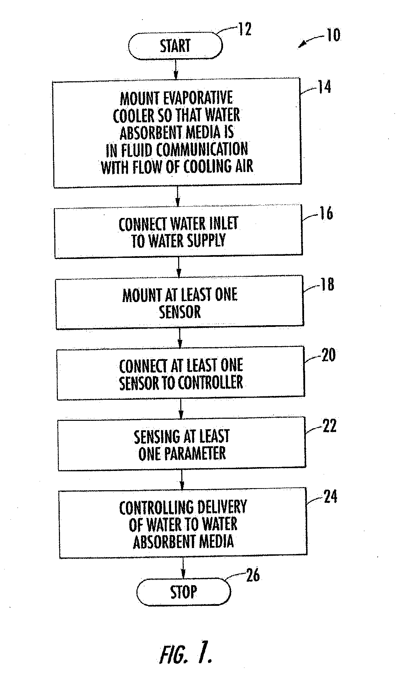

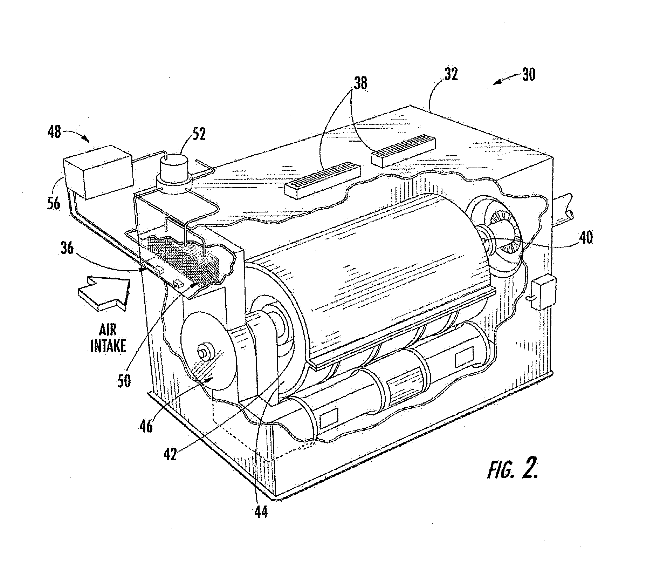

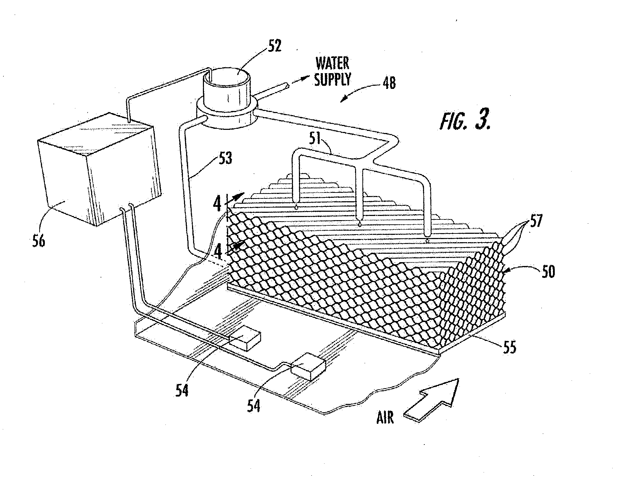

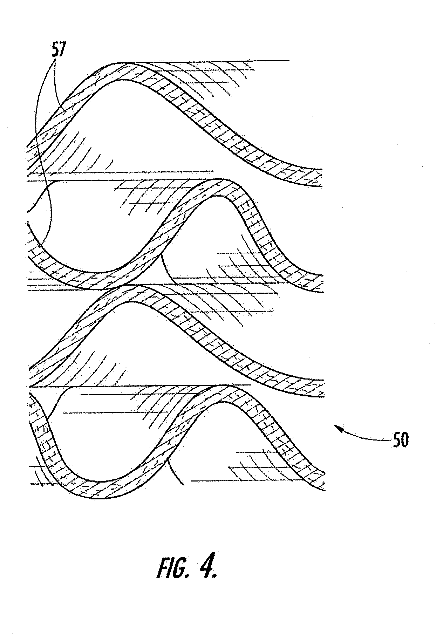

The present invention will now be described more fully hereinafter with reference to the accompanying drawings that illustrate preferred embodiments of the invention. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.
Referring initially to FIGS. 1-4, a method of increasing the capacity of an air-cooled generator **30** according to the present invention is described. The air-cooled generator **30** prior to retrofitting includes a housing **32** having an air inlet **36** and an air outlet **38**, a shaft **40** within the housing, a rotor **42** driven by the shaft, a stator **44** within the housing and surrounding the rotor, and a blower **46**. The blower **46** generates a flow of cooling air from the inlet **36** and through the outlet **38** to thereby cool the rotor **42** and/or stator **44.** The blower **46** is illustratively driven by the shaft **40**.
The method preferably includes retrofitting a water evaporative cooler **48** to the air-cooled power generator **30** to further cool the flow of cooling air, thereby increasing the capacity of the generator. As illustrated in the flow chart **10** (FIG. 1), the retrofitting preferably includes, after the start (Block **12**), mounting the water evaporative cooler **48** at Block **14** adjacent the housing **32** so that the water evaporative cooler is in fluid communication with the flow of cooling air.
The water evaporative cooler **48** illustratively includes a water absorbent media **50** and a water inlet **52** for delivering water from a water supply to the water absorbent media. The water absorbent media **50** illustratively includes a plurality of pleated paper layers **57** joined together in stacked relation (FIGS. 3 and 4).
The retrofitting, at Block **14**, may more particularly include mounting the water evaporative cooler **48** adjacent the housing **32** so that the water absorbent media **50** is in fluid communication with the flow of cooling air upstream of the rotor and stator **42, 44**. Illustratively, the water evaporative cooler **48** is mounted adjacent the air inlet **36**. As will be appreciated by those skilled in the art, however, the water evaporative cooler **48** alternately could be mounted at different adjacent locations, such as within, or even slightly spaced from the housing **32** provided that it is fluid communication with the flow of cooling air within the housing.
Retrofitting illustratively includes connecting the water inlet **52** of the water evaporative cooler **48** to the water supply (Block **16**). The water evaporative cooler **48** then may be operated to generate a flow of cooling air while delivering water from the water supply to the water absorbent media **50** so that water evaporates from the media, thus further cooling the flow of cooling air and thereby increasing the capacity of the air-cooled power generator. As illustrated, the water may be delivered from the water supply to a top portion of the water absorbent media **50** via at least one upper tube **51.** Alternately, or in addition thereto, water may be delivered via a lower tube **53** into a pan **55** in which the water absorbent media **50** may be positioned.
The water inlet **52** of the evaporative water cooler **48**, moreover, may be a controllable inlet, such as in the form of a solenoid-actuated water valve. Moreover, the evaporative water cooler **48** may further include at least one sensor **54** and a controller **56** responsive to the at least one sensor to control the water inlet **52** based upon at least one parameter sensed by the at least one sensor.
Accordingly, the retrofitting may also include mounting at least one sensor **54** (Block **18**) and connecting the at least one sensor to the controller **56** (Block **20**). Thus, more generally, the method of increasing the capacity of the air-cooled power generator **30** may also include sensing at least one parameter (Block **22**), and controlling delivery of water to the water absorbent media **50** based upon sensing the at least one parameter (Block **24**) before stopping (Block **26**).
A parameter sensed by the at least one sensor **54** preferably relates to the flow of cooling air so that controlling delivery of water to the water absorbent media **50** may be based upon sensing at least one such parameter. Specifically, the at least one parameter may be a temperature. More specifically, the temperature may include a wet bulb temperature and a dry bulb temperature. The at least one parameter may be humidity. The at least one parameter may also include both a temperature and humidity. Operating the air-cooled generator **30**, therefore, may include generating a flow of cooling air while sensing the at least one parameter and controlling the delivery of water from the water supply to the water absorbent media **50** in response to the sensing.

In the power generator **30** retrofitted with an water evaporative cooler **48** according to the above-described method, one advantage is that the evaporative cooling can be used to increase the capacity of the generator, particularly during high ambient temperature conditions. As well understood by those skilled in the art, the water evaporative cooler **48** cools by increasing the moisture content of the air through a process know as adiabatic saturation. In this process, heat (i.e., heat of vaporization) is transferred from air received from outside the housing **32** to water circulating through a media (i.e., the water absorbent media **50**). The transfer of heat accordingly reduces the temperature of the air to approximately the wet bulb temperature.

The water evaporative cooler **48** can be rated by the effectiveness of the media **50**. For example, a A90% effective@ evaporative cooler can decrease the air temperature by about 90% of the difference between the inlet dry bulb temperature and the inlet wet bulb temperature:

$$\% \text{ Effectiveness} = (\text{Tin} - \text{Tout})/(\text{Tin} - \text{Twb})$$

where Tin = inlet dry bulb temperature of the air entering the evaporative cooler,
Tout = outlet dry bulb temperature of the air exiting the evaporative cooler **48** (generator inlet air temperature); and
Twb = wet bulb temperature of the inlet air.

So, for example, if the ambient dry bulb temperature were 40C and the wet bulb temperature were 30C, the air exiting a 90% effective evaporative cooler **48** (and entering or supplied to the generator) would be 40 - 0.9 x (40-30) = 31C. A reasonably accurate way to evaluate the capability of an air-cooled generator in the normal operating range of 10°C to 40°C is given by the relationship:

$$\text{MVA} = \text{MVA}_{ref} \times ((T_{hs} - T_{im} - T_{con})/(T_{hs} - T_{ref} - T_{con}))^{1/2}$$

where MVAref = reference MVA (at the reference inlet air temp, normally 15°C or 40°C),
$T_{hs}$ = max hot spot temperature, (generally 130C for a generator with Class B insulation and 155C for a generator with Class F insulation),
$T_{in}$ - inlet air temperature,
$T_{ref}$ = reference inlet air temperature (temperature corresponding to MVAref), and
$T_{con}$ = constant temperature for given frame (determined empirically).

For example, the 40°C rating of a type of power generator at 0.85 pf is 283 MVA. The 15°C rating, calculated from the formula above using a $T_{con}$ = 44C is 329.1MVA. The 15°C application rating is, in fact, 329 MVA, which is relatively close. The formula generally is accurate to within 1 or 2 MVA in this temperature range for various generator models.

Using this relationship, the percentage increase in capability to be accrued from each degree C reduction in inlet air temperature for three generators of post-1990 design (from a base of 40°C) is:

Generator A: 0.90% per degree °C (0.50% per degree F)
Generator B: 0.75% per degree °C (0.42% per degree F)
Generator C: 0.70% per degree °C (0.39 per degree F).

Generator A was designed in the early 1990s for operation with Class B hot spots and generators B and C were designed in the late 1990s for operation with class F hot spots. The more modern generators reflect a somewhat smaller sensitivity to inlet air temperature than the older models, reflecting the use of higher temperature insulating materials and higher utilization of generator materials than was previously used. The capability increase for older (i.e., pre-1990) generators is generally somewhat higher and can normally be expected to exceed 1% per degree °C reduction in inlet air temperature for most generators of that vintage.

To assess the prospective benefit, wet bulb temperatures were obtained for a condition of 40°C for 20 different sites or locations in the United States, using the National Climatic Data Center (NCDC) Engineering Data Base as shown in Table 1 below.

TABLE 1

| Geographical Location | WB at 40C DB Deg C | Tin to Gen From 90% Eff Evap Cooler, Deg C | Delta Temp, Deg C | % Capacity Increase, Gen A | % Capacity Increase, Gen B | % Capacity Increase, Gen C |
|---|---|---|---|---|---|---|
| Boston, MA | 25.9 | 27.3 | 12.7 | 11.4 | 9.5 | 8.9 |
| Pittsburg, PA | 25.4 | 26.9 | 13.1 | 11.8 | 9.8 | 9.2 |
| Charlotte, NC | 23.7 | 25.4 | 14.7 | 13.2 | 11.8 | 10.3 |
| Atlanta, GA | 25.4 | 26.9 | 13.2 | 11.8 | 9.9 | 9.2 |
| Orlando, FL | 25.1 | 26.6 | 13.4 | 12.1 | 10.1 | 9.4 |
| New Orleans, LA | 27.2 | 28.5 | 11.5 | 10.4 | 8.6 | 8.1 |
| Houston, TX | 25.6 | 27.0 | 13.0 | 11.7 | 9.8 | 9.1 |
| Dallas, TX | 23.7 | 25.4 | 14.7 | 13.2 | 11.0 | 10.3 |
| St. Louis, MO | 25.2 | 26.7 | 13.3 | 12.0 | 10.0 | 9.3 |
| Chicago, IL | 26.1 | 27.5 | 12.6 | 11.3 | 9.4 | 8.8 |
| Minneapolis, MN | 24.1 | 25.7 | 14.4 | 12.9 | 10.8 | 10.0 |
| Kansas City, MO | 24.2 | 25.8 | 14.3 | 12.8 | 10.7 | 10.0 |
| Oklahoma City, OK | 23.3 | 25.0 | 15.1 | 13.5 | 11.3 | 10.5 |
| Denver, CO | 16.2 | 18.6 | 21.4 | 19.3 | 16.1 | 15.0 |
| Salt Lake City, UT | 17.9 | 20.1 | 19.9 | 17.9 | 14.9 | 13.9 |
| Las Vegas, NV | 18.2 | 20.4 | 19.6 | 17.6 | 14.7 | 13.7 |
| Pheonix, AZ | 20.9 | 22.9 | 17.2 | 15.4 | 12.9 | 12.0 |
| San Diego, CA | 21.4 | 23.3 | 16.8 | 15.1 | 12.6 | 11.7 |
| Sacramento, CA | 21.3 | 23.2 | 16.9 | 15.2 | 12.6 | 11.8 |
| Portland, OR | 21.3 | 23.2 | 16.8 | 15.1 | 12.6 | 11.8 |
| AVG | | 24.8 | 15.2 | 13.7 | 11.4 | 10.6 |

Preliminary estimates, using somewhat cruder data compiled by the American Society of Heating, Refrigerating, and Air-Conditioning Engineers (ASHRAE), indicated benefits of roughly 15% for Generator A and 10% for Generators B and C. The NCDC figures, while slightly lower for type A generators and slightly higher for type B and C generators, appear to track this analysis.

That the ASHRAE data indicated slightly higher benefits even though the data should have been more conservative (i.e., the ASHRAE data was 1% non-coincident wet bulb temperatures, while the NCDC data as for coincident wet bulb temperatures) is partly a reflection of somewhat different geographical locations (e.g., National Oceanic and Atmospheric Administration (NOAA) data from Orlando, FL was for the Orlando airport, while Orlando, FL data from ASHRAE did not have a precise geographical location) and different study periods. It seems principally, however, to reflect the fact that the mean and maximum values of wet bulb temperature during high ambient temperature conditions do not differ by much in any given location.

As can be seen from the data of Table 1, wet bulb temperatures at 40°C ambient temperatures are generally about 25°C in the Eastern and Midwestern US and roughly 20°C in the Rockies and West Coast. As understood by those skilled in the art, detailed data on a wide variety of geographical locations is available from a number of sources, including the ASHRAE "Fundamentals" Book and the NCDC Engineering Weather Data Bank, which is available on CD-Rom.

Note that the benefit is considerably less variable than might be expected. That is, it might be expected that the benefit from evaporative cooling in desert areas is considerably higher than that in areas generally perceived as humid or damp. But the attainable benefit in Orlando, for example, which is certainly widely perceived as being damp, is almost 80% of the attainable benefit in Phoenix (certainly perceived as being desert-like) for the same maximum temperature. A brief review of other sites where one would normally not expect evaporative cooling to be favorable (e. g., San Juan, PR, Rio de Janeiro, the Ivory Coast, and Managua, Nicaragua) revealed that the benefits attainable in even humid tropical locations and on tropical islands are quite comparable to (and sometimes superior to) those attainable in the Gulf Coast cities of New Orleans, Los Angles and Houston. Thus, there appear to be few inhabited places where evaporative cooling would not be applicable for increasing generator capability during warm conditions.

An interesting aspect of evaporative cooling is that the wet bulb temperature generally tends to remain constant at high ambient temperature levels, i.e., 30°C (86F) and higher. For example, the data in Table 2 below was extracted for Oklahoma City, Oklahoma, which most closely resembled the average of the cities examined from the NCDC Engineering Weather database. The last column shows the discharge from a 90% effective evaporative cooler, assuming a mid-range ambient temperature. Clearly, an assumption of cooler discharge temperature (which is the generator air inlet temperature) is quite reasonable and becomes conservative at the low end of the range.

TABLE 2

| Ambient T, F | Wet Bulb T, F | Wet Bulb T, C | Evap cooler Disch, C |
|---|---|---|---|
| 105 to 109 | 72.1 | 22.3 | 24.2 |
| 100 to 104 | 73.9 | 23.3 | 24.8 |
| 95-99 | 73.8 | 23.2 | 24.5 |
| 90-94 | 73.4 | 23.0 | 24.0 |
| 85-89 | 72.0 | 22.2 | 23.1 |
| 80-84 | 69.8 | 21.0 | 21.7 |
| 75-79 | 67.6 | 19.8 | 20.3 |
| 70-74 | 65.1 | 19.8 | 20.0 |

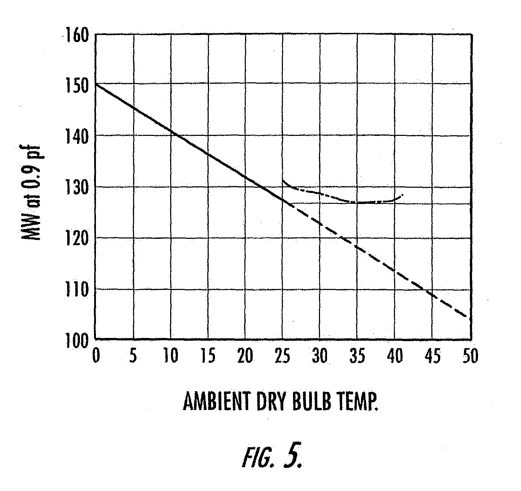

The corresponding capability curve for a 0.9 pf Generator A (class B insulation system) appears in the graph of FIG. 5, using data from Oklahoma City and constant cooler discharge approximation. This provides a simple approach to conservatively assessing benefit attainable from evaporative cooling at any given site:

1. Obtain the wet bulb temperature for the maximum dry bulb temperature condition;
2. Calculate the expected cooler discharge temperature, Tdis;
3. Calculate the capability corresponding to a generator inlet air temperature of Tdis for all ambient temperatures Tamb > tDis.

Inasmuch as open air-cooled generators are limited by the capacity of the generator during the warmest ambient temperature conditions, the retrofit of an evaporative cooler **48** may permit the use of an air-cooled generator instead of replacement with a hydrogen-cooled generator for turbine upgrades, resulting in significant application savings.

Additionally, combined cycle steam turbine applications often entail the use of duct firing (supplemental direct steam heating) during high ambient temperature conditions, resulting in an increase in required capability during extreme high ambient temperature conditions. Evaporative cooling, in such instances, can increase the capacity of the generator by over 15% and allow maximum turbine capacity to be utilized.

Use of evaporative cooling also reduces the average and discharge temperatures of air-cooled generators, even if full use is made of the increase in ratings afforded by the lower inlet air temperature. This is because the ratings limitation is normally based on the hottest-spot winding temperature. Other limiting capabilities are often based upon component cooling air temperatures (e.g., those of blowers, generator core end plates, rotor retaining ring shrink fits, etc.), so this is a practical operating consideration since this increases the operating margin for off-nominal conditions.

Of similar importance is the average operating temperature of the machine and of the insulation. A reduction in generator cooling air of 14°C, for example, reduces the temperature of the insulation at the hot spot by roughly half this amount at a higher output. Since the hot-spot temperature is the same for both cases, average insulation temperature is roughly 7°C lower for the higher capability operation. This reduction in temperature can result in extended insulation life (the common rule of thumb being that insulation life doubles for every 10°C reduction in average temperature).

Use of evaporative cooling permits upgrades of existing units of between 8% and 20%, depending on the generator characteristics and site. Evaporative cooling will also reduce the air temperature within the generator, decreasing the rate of insulation aging (generally understood to double for a 10°C increase in average temperature) and relieves constraints associated with high temperature operation.

Applicants theorize, without wishing to be bound thereto, that adding evaporative cooling may also increase the life of the generator by reducing the likelihood of partial discharge. Partial discharge is a physical process, also referred to as corona, which slowly destroys the generator's stator winding insulation. Empirical evidence suggests that the mean time to failure of the generator due to partial discharge increases exponentially with relative humidity in the generator. See Bartinikas and McMahon, Engineering Dielectrics: Vol. I - Corona Measurement and Interpretation (ASTM STP 669). Upgrading an air-cooled power generator to include an evaporative cooler may increase relative humidity in the generator and thereby increase its life by reducing the likelihood of damage to the stator windings due to partial discharge or corona.

Many modifications and other embodiments of the invention will come to the mind of one skilled in the art having the benefit of the teachings presented in the foregoing descriptions and the associated drawings. Therefore, it is to be understood that the invention is not to be limited to the specific embodiments disclosed, and that modifications and other embodiments are intended to be included within the scope of the appended claims

**Claims**

1.  A method of upgrading an air-cooled power generator comprising a housing having an air inlet and an air outlet, a shaft within the housing, a rotor driven by the shaft, a stator within the housing and surrounding the rotor, and a blower for generating a flow of cooling air from the inlet and through the outlet to thereby cool the rotor and stator, the method comprising:

    retrofitting a water evaporative cooler to the air-cooled power generator, the water evaporative cooler comprising a water absorbent media and a water inlet for delivering water from a water supply to the water absorbent media, the retrofitting comprising
       mounting the water evaporative cooler adjacent the housing so that the water absorbent media is in fluid communication with the flow of cooling air upstream of the rotor and stator, and
       connecting the water inlet to the water supply; and
    operating the air-cooled generator to generate the flow of cooling air while delivering water from the water supply to the water absorbent media so that water evaporates therefrom and further cools the flow of cooling air to thereby upgrade the air-cooled power generator.

2.  A method according to Claim 1 further comprising:

    sensing at least one parameter relating to the conditions of cooling air; and
    controlling delivery of water to the water absorbent media based upon sensing the at least one parameter.

3.  A method according to Claim 2 wherein the at least one parameter comprises temperature.

4.  A method according to Claim 3 wherein the at least one parameter comprises a wet bulb temperature and a dry bulb temperature.

5.  A method according to Claim 2 wherein the at least one parameter comprises humidity.

6.  A method according to Claim 2 wherein the at least one parameter comprises both temperature and humidity.

7.  A method according to Claim 1 wherein the blower of the air-cooled power generator is driven by the shaft.

8.  A method of increasing capacity of an air-cooled power generator comprising a housing having an air inlet and an air outlet, a shaft within the housing, a rotor driven by the shaft, a stator within the housing and surrounding the rotor, and a blower for generating a flow of cooling air from the inlet and through the outlet to thereby cool the rotor and stator, the method comprising:

    retrofitting a water evaporative cooler to the air-cooled power generator, the water evaporative cooler comprising a water absorbent media, a controllable water inlet for controllably delivery of water from a water supply to the water absorbent media, at least one sensor, and a controller for operating the controllable water inlet based upon the at least one sensor, the retrofitting comprising
       mounting the water evaporative cooler adjacent the housing so that the water absorbent media is in fluid communication with the flow of cooling air upstream of the rotor and stator,

connecting the controllable water inlet to the water supply,

mounting the at least one sensor for sensing at least one parameter relating to the flow of cooling air, and

connecting the controller to the at least one sensor; and

operating the air-cooled generator to generate the flow of cooling air while sensing the at least one parameter and controlling delivering water from the water supply to the water absorbent media based upon the sensing so that water evaporates therefrom and further cools the flow of cooling air to thereby increase the capacity of the air-cooled power generator.

9. A method according to Claim 8 wherein the at least one parameter comprises temperature.

10. A method according to Claim 8 wherein the at least one parameter comprises a wet bulb temperature and a dry bulb temperature.

11. A method according to Claim 8 wherein the at least one parameter comprises humidity.

12. A method according to Claim 8 wherein the at least one parameter comprises both temperature and humidity.

13. A method according to Claim 8 wherein the blower of the air-cooled power generator is driven by the shaft.

14. A method of increasing capacity of an air-cooled power generator comprising a housing having an air inlet and an air outlet, a shaft within the housing, a rotor driven by the shaft, a stator within the housing and surrounding the rotor, and a blower for generating a flow of cooling air from the inlet and through the outlet to thereby cool the rotor and stator, the method comprising:

retrofitting a water evaporative cooler to the air-cooled power generator to thereby increase the capacity of the air-cooled generator, the water evaporative cooler comprising a water absorbent media, a controllable water inlet for controllably delivering water from a water supply to the water absorbent media, at least one sensor, and a controller for operating the controllable water inlet based upon the at least one sensor, the retrofitting comprising

mounting the water evaporative cooler adjacent the housing so that the water absorbent media is in fluid communication with the flow of cooling air upstream of the rotor and stator,

connecting the controllable water inlet to the water supply,

mounting the at least one sensor for sensing at least one parameter relating to the flow of cooling air, and

connecting the controller to the at least one sensor.

15. A method according to Claim 14 wherein the at least one parameter comprises temperature.

16. A method according to Claim 14 wherein the at least one parameter comprises a wet bulb temperature and a dry bulb temperature.

17. A method according to Claim 14 wherein the at least one parameter comprises humidity.

18. A method according to Claim 14 wherein the at least one parameter comprises both temperature and humidity.

19. A method according to Claim 14 wherein the blower is driven by the shaft.

START — 12

— 10

MOUNT EVAPORATIVE
COOLER SO THAT WATER
ABSORBENT MEDIA IS
IN FLUID COMMUNICATION
WITH FLOW OF COOLING AIR — 14

CONNECT WATER INLET
TO WATER SUPPLY — 16

MOUNT AT LEAST ONE
SENSOR — 18

CONNECT AT LEAST ONE
SENSOR TO CONTROLLER — 20

SENSING AT LEAST
ONE PARAMETER — 22

CONTROLLING DELIVERY
OF WATER TO WATER
ABSORBENT MEDIA — 24

STOP — 26

*FIG. 1.*

FIG. 2.

FIG. 3.

FIG. 4.

FIG. 5.

*FIG. 6.*